# EUROPÄISCHE PATENTSCHRIFT

(11) **EP 0 444 269 B1**
(45) Veröffentlichungstag und Bekanntmachung des Hinweises auf die Patenterteilung: **02.11.1995**
(21) Anmeldenummer: 90124011.9
(22) Anmeldetag: 13.12.1990
(51) Int. Cl.: G05D 7/06, G05D 23/19, F24D 19/10

(54) **Verfahren zur Regelung der Leistung einer Pumpe**
Method for regulating the load of a pump
Procédé de régulation de la charge d'une pompe

(30) Priorität: 28.02.1990 DE 4006186
(43) Veröffentlichungstag der Anmeldung: 04.09.1991
(73) Patentinhaber: Hennel, Ewald, D-30419 Hannover (DE)
(72) Erfinder: Hennel, Ewald, D-30419 Hannover (DE)
(74) Vertreter: Döring, Roger, Dipl.-Ing.

(56) Entgegenhaltungen:
- EP-A- 0 279 939
- DE-A- 3 508 049
- US-A- 4 830 218

## Beschreibung

Die Erfindung bezieht sich auf ein Verfahren zur Regelung der Leistung einer von einem drehzahlgeregelten Elektromotor angetriebenen Pumpe, mittels derer ein Fluid in einem System entlang vorgegebener Wege bewegt wird, deren Anzahl und lichter Querschnitt variabel sind, mit welchem die Strömungsgeschwindigkeit des Fluids mittels einer Sonde erfaßt wird, die ein der Strömungsgeschwindigkeit proportionales elektrisches Signal liefert und mit welchem das Signal der Sonde einem Rechner zugeführt wird, durch welchen die Drehzahl des Elektromotors und damit die Leistung der Pumpe geregelt wird (DE-OS 37 04 756).

Ein solches Verfahren ist beispielsweise für Heizungsanlagen einsetzbar, bei denen das Fluid "Wasser" als Wärmeträger mittels einer Pumpe durch ein Rohrsystem und eine Vielzahl von Verbrauchern gepumpt wird. Es kann aber auch zur Bewegung anderer Flüssigkeiten oder gasförmiger Stoffe durch Rohre oder Kanäle oder auch in offenen Systemen auf vorgegebenen Wegen eingesetzt werden. Stellvertretend für alle möglichen Anwendungsfälle wird das Verfahren im folgenden für den Betrieb einer Heizungsanlage beschrieben.

Heizungsanlagen gibt es in den unterschiedlichsten Größenordnungen. Sie sind beispielsweise in Einfamilienhäusern, in Mietshäusern, in großen Bürohäusern oder auch bei Firmen mit einer Vielzahl von Gebäuden installiert. In Abhängigkeit von der Größe der Heizungsanlage, die im wesentlichen von der Anzahl der Verbraucher bestimmt wird, ist die benötigte Pumpenleistung zu bemessen. So reicht in vielen Fällen eine einzige Umwälzpumpe aus. Bei größeren Anlagen werden eine Hauptpumpe und zusätzliche Pumpen für einzelne Heizkreise eingesetzt. Die maximale Leistung der Pumpe bzw. Pumpen wird stets so bemessen, daß alle in einer Anlage befindlichen Verbraucher auch dann ausreichend versorgt werden können, wenn sie gleichzeitig mit maximalem Bedarf eingeschaltet sind. "Verbraucher" sind dabei beispielsweise Heizkörper, Flächenheizungen, Wärmetauscher oder Klimaanlagen.

Die volle Pumpenleistung wird nur dann benötigt, wenn alle Verbraucher oder zumindest der größte Teil derselben eingeschaltet sind. In den Zeiten, in denen nur ein Teil der Verbraucher eingeschaltet ist bzw. gedrosselt betrieben wird - beispielsweise nachts oder in der wärmeren Jahreszeit -, kann die Pumpenleistung vermindert werden. Das gilt auch, wenn der von den Verbrauchern benötigte Bedarf beispielsweise über Thermostatventile gedrosselt wird. Wenn die Pumpe in diesen Fällen mit voller Leistung weiter fördert, kann es zu störenden Strömungsgeräuschen im Rohrsystem der Heizungsanlage kommen. Außerdem hat die Pumpe dabei durchgehend fast den maximalen Energiebedarf mit entsprechend hohen Stromkosten.

Bei dem Verfahren nach der eingangs erwähnten DE-OS 37 04 756 wird die Leistung, der Pumpe nach einer Kennlinie geregelt, die an jedem Punkt oberhalb der für das Rohrnetz der Heizungsanlage geltenden Rohrnetzkennlinie liegt, die anhand von Tabellen und Erfahrungswerten für den ungedrosselten Betrieb der Heizungsanlage berechnet wird. Dieses bekannte Verfahren arbeitet mit großem Erfolg. Es setzt jedoch die Kenntnis der Heizungsanlage und die Berechnung der Rohrnetzkennlinie voraus.

Der Erfindung liegt die Aufgabe zugrunde, das eingangs geschilderte Verfahren derart weiterzubilden, daß die Leistung einer ein Fluid bewegenden Pumpe für offene und geschlossene Systeme ohne vorherige Berechnung irgendwelcher Teile des jeweiligen Systems geregelt werden kann.

Diese Aufgabe wird gemäß der Erfindung dadurch gelöst,
- daß zunächst in einem Kalibriervorgang bei beliebigem Zustand des Systems das elektrische Signal der Sonde in mehreren Punkten mit gezielter Einstellung der Leistung der Pumpe und zugehöriger prozentualer Strömungsgeschwindigkeit des Fluids vom Stillstand der Pumpe bis zu 100 % Leistung derselben entsprechend 100 % Strömungsgeschwindigkeit zumindest in Stufen aufgenommen und dem Rechner jeweils als Meßwert aufgegeben wird,
- daß von dem Rechner eine Kennlinie erzeugt wird, die durch alle von der Sonde gelieferten Meßwerte verläuft,
- daß bei Durchführung des Verfahrens die Leistung der Pumpe vom Rechner zunächst entsprechend der Kennlinie solange in den durch den Kalibriervorgang gegebenen Grenzen geregelt wird, bis durch Änderungen im System eine höhere Strömungsgeschwindigkeit des Fluids als bei 100 % Leistung der Pumpe beim Kalibriervorgang auftritt,
- daß vom Rechner der höchste Wert der Strömungsgeschwindigkeit auf der verlängerten Kennlinie als neuer Meßwert für 100 % Leistung der Pumpe festgelegt wird,
- daß der Rechner alle prozentualen Werte der Strömungsgeschwindigkeit auf der Kennlinie jeweils in einem Verhältnis verschiebt, das dem Verhältnis der neuen höchsten Strömungsgeschwindigkeit zu der vorangehenden entspricht und
- daß eine dazu analoge Adaption der Kennlinie jeweils dann durch den Rechner durchgeführt wird, wenn eine weitere Erhöhung der Strömungsgeschwindigkeit eintritt.

Mit diesem Verfahren ist ein selbstregelndes System geschaffen, daß zur Regelung der Leistung einer Pumpe für jedes beliebige System verwendet werden kann, in dem ein Fluid zu bewegen ist. Die Gegebenheiten des Systems werden durch die jeweils als erstes durchzuführende Kalibrierung mit Aufnahme der Meßwerte zur Bildung der Kennlinie durch den Rechner erfaßt und für den weiteren Betrieb als Basis festgelegt. Die aufgenommenen Meßwerte sind für das jeweilige System spezifisch, so daß das Fluid mit maximalem Wirkungsgrad durch das System bewegt wird. Beispielsweise eine Heizungsanlage kann daher sehr einfach so betrieben werden, daß bei jedem Drosselzustand einzelner Verbraucher oder einzelner Heizkreise stets eine optimale Versorgung aller eingeschalteten Verbraucher sichergestellt ist. Es können weder eine Überversorgung noch eine Unterversorgung der Verbraucher auftreten. Auch störende Geräusche in der Heizungsanlage durch eine zu hohe Leistung der Pumpe sind ausgeschlossen.

Von besonderer Bedeutung ist dabei, daß die Größe oder sonstige Eigenschaften des jeweiligen Systems nicht bekannt sein müssen. Es muß nur dafür gesorgt werden, daß die Pumpe groß genug ist, um den Betrieb des Systems bei maximal möglicher Anforderung sicherzustellen. Der entsprechend programmierte Rechner erzeugt die erste Kennlinie nach den im Kalibriervorgang aufgenommenen Meßwerten. Die dabei aufgenommenen Werte, in denen einer bestimmten Pumpenleistung eine bestimmte prozentuale Strömungsgeschwindigkeit des Fluids zugeordnet ist, gelten nur solange, bis in dem System eine höhere Strömungsgeschwindigkeit auftritt. Das kann beispielsweise bei Zuschaltung weiterer Verbraucher in einer Heizungsanlage geschehen. Der bei 100 % Leistung der Pumpe aufgenommene Meßwert verschiebt sich dann auf der Kennlinie in Richtung einer höheren Strömungsgeschwindigkeit. Die jetzt größte Strömungsgeschwindigkeit wird vom Rechner gleich 100 % gesetzt und die Leistung der Pumpe von 100 % wird diesem Wert auf der Kennlinie zugeordnet. Gleichzeitig werden alle bestimmten prozentualen Strömungsgeschwindigkeiten entsprechenden Pumpenleistungen auf der Kennlinie verschoben. Dabei wird nur der bei Stillstand der Pumpe aufgenommene Meßwert beibehalten. Alle anderen Punkte werden in dem Verhältnis verschoben, das sich aus dem neuen Wert bei 100 % Strömungsgeschwindigkeit im Verhältnis zum vorangehenden ergibt. Die Pumpe wird von dann an auf der geänderten Kennlinie gefahren, bis sich eine weitere Erhöhung der Strömungsgeschwindigkeit einstellt. Es wird dann - wie beschrieben - eine weitere Verschiebung der Meßpunkte auf der Kennlinie vom Rechner vorgenommen. Auf diese Weise wird automatisch dann die beste Kennlinie des Systems vom Rechner erzeugt, wenn das Fluid mit maximaler Geschwindigkeit durch das System strömt. Eine Korrektur bzw. Adaption der Kennlinie in Richtung kleinerer Strömungsgeschwindigkeiten findet nicht statt.

Vorteilhafte Ausgestaltungen der Erfindung gehen aus den Unteransprüchen hervor.

Das Verfahren nach der Erfindung wird anhand der Zeichnungen als Ausführungsbeispiel erläutert. Dabei wird weiter stellvertretend für alle anderen Anwendungsfälle der Einsatz des Verfahrens in einer Heizungsanlage beschrieben.

Es zeigen:

Fig. 1 in schematischer Darstellung eine Heizungsanlage.

Fig. 2 eine bei dem Verfahren nach der Erfindung verwendbare Sonde.

Fig. 3 eine Kennlinie des Systems mit dem im Fluid gemessenen Temperaturunterschied in Abhängigkeit von der Strömungsgeschwindigkeit des Fluids.

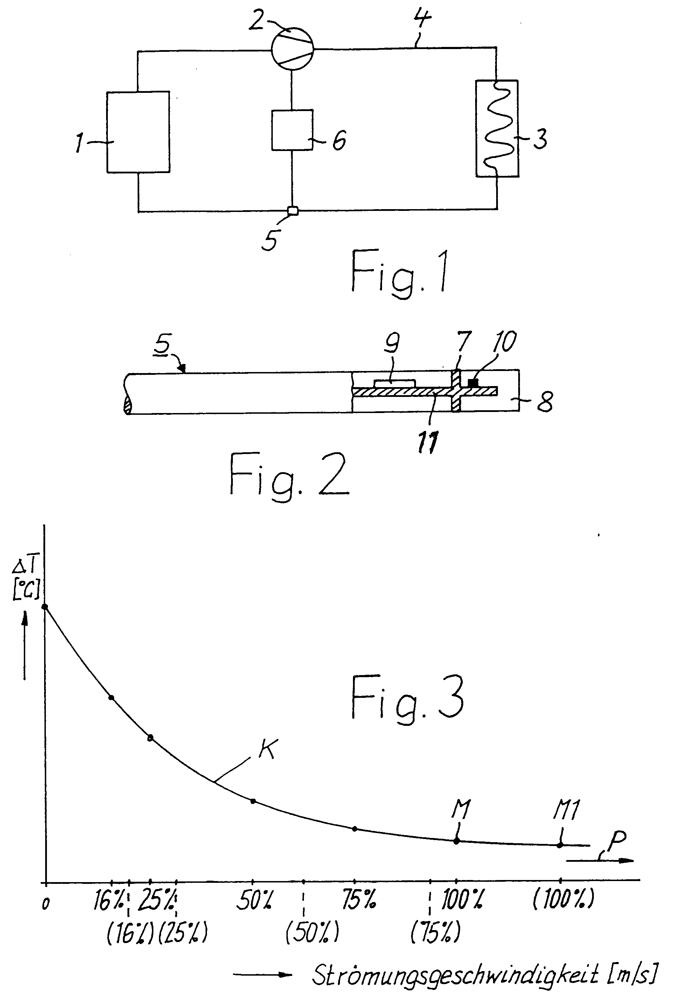

Die Heizungsanlage nach Fig. 1 besteht aus einem Heizkessel 1, einer Pumpe 2 und einem Verbraucher 3, die durch Rohre 4 miteinander verbunden sind. Der Verbraucher 3 symbolisiert eine Vielzahl von zur Heizungsanlage gehörenden Verbrauchern. Die Rohre 4 gelten für das zugehörige Rohrsystem. Zur Erfassung der Strömungsgeschwindigkeit des von der Pumpe 2 umgewälzten Fluids "Wasser" als Wärmeträger, ist an das Rohrsystem eine Sonde 5 angeschlossen, die im dargestellten Ausführungsbeispiel im Rücklaufrohr liegt. Sie kann an jeder beliebigen Stelle der Heizungsanlage montiert werden, an der die jeweilige Gesamtmenge des Wassers vorbeiströmt. Die Sonde 5 liefert ein elektrisches Signal, das auf einen Rechner 6 gegeben wird, durch den die Leistung der Pumpe 2 geregelt wird. Dazu wird die Drehzahl des die Pumpe 2 antreibenden Elektromotors geregelt.

Die Sonde 5 kann entsprechend Fig. 2 beispielsweise stabförmig ausgebildet sein. Zweckmäßig wird sie in eines der Rohre 4 eingebaut, damit sie vom Wasser umströmt wird. Sie hat einen metallischen Kern 11, der im dargestellten Ausführungsbeispiel eine ringförmige Erweiterung 7 aufweist, deren Umfangsfläche frei ist und in Montageposition mit dem Wasser in Berührung steht. Die restlichen Teile des Kerns 11 sind durch Isoliermaterial 8 abgedeckt. Der Kern 11 besteht beispielsweise aus Messing. Es soll ein Material verwendet werden, das Wärme gut leitet, aber schlecht speichert.

Zur Sonde 5 gehören auch ein Heizelement 9 und ein Temperaturfühler 10. Das Heizelement 9 kann beispielsweise ein Transistor sein. Es wird zur Erwärmung des Kerns 11 beispielsweise an eine Konstantstromquelle angeschlossen.

Das Verfahren nach der Erfindung arbeitet beispielsweise wie folgt:

Nach Einbau der Sonde 5 in das Rohrsystem einer Heizungsanlage und Anschluß derselben an den Rechner 6 werden zunächst Meßwerte aufgenommen, um die Sonde 5 auf das vorliegende System zu kalibrieren. Dazu werden ein erster Meßwert beim Stillstand und ein letzter Meßwert bei voller Leistung der Pumpe 2 aufgenommen, also bei maximaler Drehzahl des dieselbe antreibenden Elektromotors. Zwischen diesen beiden Meßwerten werden bei unterschiedlichen Drehzahlen des Elektromotors und damit bei unterschiedlichen Leistungen der Pumpe 2 weitere Meßwerte aufgenommen, denen bestimmte prozentuale Werte der Strömungsgeschwindigkeit entsprechen.

Für jeden Meßwert wird der Sonde 5 beispielsweise eine gleichbleibende Wärmemenge zugeführt. Dazu wird das Heizelement 9 eine bestimmte Zeit lang erwärmt. Gleichzeitig wird mittels des Temperaturfühlers 10 die Temperatur der Sonde 5 zu Beginn der Wärmezufuhr und nach Ablauf einer bestimmten Zeit gemessen. Die dabei ermittelte, durch die Geschwindigkeit des strömenden Wassers bedingte Temperaturdifferenz ΔT wird in eine elektrische Größe umgesetzt und dem Rechner 6 als Meßwert aufgegeben. Für jeden Meßpunkt wird die gleiche Wärmemenge zugeführt. Die Temperaturdifferenz ΔT wird für jeden Meßpunkt nach der gleichen Zeitspanne ermittelt. In Fig. 3 ist die Temperaturdifferenz ΔT in Abhängigkeit von der Strömungsgeschwindigkeit des Wassers aufgetragen. Die beim Kalibriervorgang aufgenommenen Meßwerte sind als Punkte eingezeichnet.

Der entsprechend programmierte Rechner 6 legt nach Beendigung des Kalibriervorgangs eine Kennlinie K durch alle Meßpunkte, nach der die Pumpe 2 bzw. deren Elektromotor während des anschließenden Betriebes zunächst geregelt wird. Der Rechner 6 ist so programmiert, daß zwischen den ΔT-Werten und der Strömungsgeschwindigkeit in erster Näherung ein etwa quadratischer Zusammenhang angenommen wird. Die Kennlinie K erhält dementsprechend einen parabelförmigen bzw. einen einer e-Funktion entsprechenden Verlauf. Jede Drosselung von Verbrauchern der Heizungsanlage führt zu einer Verminderung der Strömungsgeschwindigkeit des Wassers und damit zu einem größeren ΔT. Die Leistung der Pumpe 2 wird dann durch den Rechner 6 auf der Kennlinie K entsprechend geregelt. Dabei wird der Sonde 5 ebenso wie während des beschriebenen Kalibriervorgangs wieder die gleichbleibende Wärmemenge zugeführt. Der zeitliche Abstand zwischen zwei Messungen bzw. Meßwerten wird zweckmäßig konstant gehalten.

Es ist auch möglich, die Sonde 5 mit konstanter Leistung ständig aufzuheizen. Die Temperatur im Wasser in der Umgebung der Sonde 5 erreicht dann einen sogenannten "Sättigungswert", bei dem keine Temperaturerhöhung mehr stattfindet. Dieser Sättigungswert ist abhängig von der Strömungsgeschwindigkeit des Wassers. Zur Feststellung einer Temperaturdifferenz △T und damit zum Erhalt eines dem Rechner 6 aufgebbaren Meßwerts wird hier ein zusätzlicher Fühler zur Temperaturmessung eingesetzt, der räumlich von der Sonde 5 entfernt ist, so daß er bei der Erwärmung derselben nicht mit erwärmt wird. Der Fühler kann am gleichen Gerät wie die Sonde 5 angebracht sein. Er muß nur ausreichend gegenüber derselben isoliert sein.

Die Pumpe 2 wird vom Rechner 6 solange entsprechend der Kalibrierung geregelt, wie in der Heizungsanlage kein erhöhter Bedarf entsteht. Wenn beispielsweise mehr Verbraucher in die Heizungsanlage eingeschaltet werden oder wenn der Drosselungsgrad eingeschalteter Verbraucher vermindert wird, dann entsteht ein erhöhter Bedarf mit einer erhöhten Strömungsgeschwindigkeit. Die neue, erhöhte Strömungsgeschwindigkeit wird jetzt bei 100 % Leistung der Pumpe 2 gleich 100 % gesetzt. Der 100 % Meßpunkt M wandert also auf der Kennlinie K nach M1. Allen anderen Leistungswerten der Pumpe 2 werden jetzt vom Rechner 6 neue prozentuale Strömungsgeschwindigkeiten zugeordnet. Die entsprechenden Werte sind in Fig. 3 in Klammern eingetragen. Sie sind gegenüber den beim Kalibriervorgang aufgenommenen Werten in dem Verhältnis auf der Kennlinie K verschoben, daß sich aus dem neuen 100 %-Wert zum vorangehenden ergibt. Die Pumpe 2 wird jetzt mit den neuen Werten auf der Kennlinie K geregelt.

Bei einer weiteren Erhöhung der Strömungsgeschwindigkeit und einer weiteren Verminderung des △T-Wertes wandert der 100 %-Meßpunkt von M1 weiter in Richtung des Pfeiles P. Es wird dann vom Rechner 6 abermals eine Anpassung der Kennlinie K vorgenommen. Diese Adaption wird maximal so weit durchgeführt, bis alle Verbraucher der Heizungsanlage ungedrosselt eingeschaltet sind. Eine Adaption in Richtung kleinerer Strömungsgeschwindigkeiten findet nicht statt.

Um einen Einfluß der Wassertemperatur auf das Signal der Sonde 5 auszuschließen, kann diese Temperatur gesondert gemessen und ebenfalls dem Rechner 6 aufgegeben werden. Der Rechner 6 führt eine entsprechende Kompensation durch.

Um sicherzustellen, daß in keinem Betriebszustand eine Über- bzw. Unterversorgung der Verbraucher 3 eintritt, kann der Rechner 6 die Pumpe 2 besonders im mittleren Regelbereich auf eine gegenüber der Kennlinie K geringfügig erhöhte Leistung regeln. Die Erhöhung kann beispielsweise bei 5 % liegen.

Zweckmäßig wird vom Rechner 6 auch eine untere Grenze für den Betrieb der Pumpe 2 vorgegeben, die etwa bei 40 % der maximalen Leistung liegt.

Für systembedingte Störungen der Sonde 5 oder im Rechner 6 kann außerdem eine Schutzschaltung vorgesehen werden, durch welche die Pumpe 2 solange auf beispielsweise etwa 70 % ihrer maximalen Leistung eingestellt wird, bis die Störung beseitigt ist.

## Patentansprüche

1. Verfahren zur Regelung der Leistung einer von einem drehzahlgeregelten Elektromotor angetriebenen Pumpe (2), mittels derer ein Fluid in einem System entlang vorgegebener Wege (4) bewegt wird, deren Anzahl und lichter Querschnitt variabel sind, mit welchem die Strömungsgeschwindigkeit des Fluids mittels einer Sonde (5) erfaßt wird, die ein der Strömungsgeschwindigkeit proportionales elektrisches Signal liefert und mit welchem das Signal der Sonde (5) einem Rechner (6) zugeführt wird, durch welchen die Drehzahl des Elektromotors und damit die Leistung der Pumpe geregelt wird,
dadurch gekennzeichnet,
- daß zunächst in einem Kalibriervorgang bei beliebigem Zustand des Systems das elektrische Signal der Sonde (5) in mehreren Punkten mit gezielter Einstellung der Pumpenleistung und zugehöriger prozentualer Strömungsgeschwindigkeit des Fluids vom Stillstand der Pumpe (2) bis zu 100 % Leistung derselben entsprechend 100 % Strömungsgeschwindigkeit zumindest in Stufen aufgenommen und dem Rechner (6) jeweils als Meßwert aufgegeben wird,
- daß von dem Rechner (6) eine Kennlinie (K) erzeugt wird, die durch alle von der Sonde (5) gelieferten Meßwerte verläuft,
- daß bei Durchführung des Verfahrens die Leistung der Pumpe (2) vom Rechner (6) zunächst entsprechend der Kennlinie (K) solange in den durch den Kalibriervorgang gegebenen Grenzen geregelt wird, bis durch Änderungen im System eine höhere Strömungsgeschwindigkeit des Fluids als bei 100 % Leistung der Pumpe (2) beim Kalibriervorgang auftritt,
- daß vom Rechner (6) der höchste Wert der Strömungsgeschwindigkeit auf der verlängerten Kennlinie (K) als neuer Meßwert für 100 % Leistung der Pumpe (2) festgelegt wird,
- daß der Rechner (6) alle prozentualen Werte der Strömungsgeschwindigkeit auf der Kennlinie (K) jeweils in einem Verhältnis verschiebt, das dem Verhältnis der neuen höchsten Strömungsgeschwindigkeit zu der vorangehenden entspricht und
- daß eine dazu analoge Adaption der Kennlinie (K) jeweils dann durch den Rechner (6) durchgeführt wird, wenn eine weitere Erhöhung der Strömungsgeschwindigkeit eintritt.

2. Verfahren nach Anspruch 1, dadurch gekennzeichnet,
- daß der Sonde (5) zur Aufnahme der Meßwerte eine jeweils gleichbleibende Wärmemenge zugeführt wird,
- daß die Temperatur der Sonde (5) zu Beginn der Wärmezufuhr und nach Ablauf einer jeweils gleichbleibenden Zeitdauer gemessen wird und
- daß die dabei jeweils ermittelte Temperaturdifferenz nach Umsetzung in ein elektrisches Signal dem Rechner (6) als Meßwert aufgegeben wird.

3. Verfahren nach Anspruch 1, dadurch gekennzeichnet,
- daß die Sonde (5) mit konstanter Leistung kontinuierlich erwärmt wird,
- daß die Temperatur des Fluids mit einem Fühler an einer von der Sonde (5) räumlich getrennten Stelle gemessen wird und
- daß der in zeitlichen Abständen festgestellte Temperaturunterschied der Temperaturen von Sonde (5) und Fühler dem Rechner (6) als Meßwert aufgegeben wird.

4. Verfahren nach Anspruch 1 oder 2, dadurch gekennzeichnet,
- daß der Sonde (5) bei laufendem Betrieb der Pumpe (2) in zeitlichen Abständen jeweils die gleiche Wärmemenge wie beim Kalibriervorgang zugeführt wird,
- daß auch während des Betriebs der Pumpe (2) die Temperaturdifferenz in der gleichen Zeitdauer wie beim Kalibriervorgang gemessen und nach Umsetzung in ein elektrisches Signal dem Rechner (6) aufgegeben wird und
- daß die dabei von der Sonde (5) gelieferten Signale zur Regelung der Leistung der Pumpe (2) entsprechend der jeweils veränderten Kennlinie (K) verwendet werden.

5. Verfahren nach Anspruch 1 oder 3, dadurch gekennzeichnet,
- daß die Sonde (5) bei laufendem Betrieb der Pumpe (2) mit konstanter Leistung kontinuierlich erwärmt wird,
- daß die Temperatur des Fluids mit dem Fühler auch während des laufenden Betriebs der Pumpe (2) gemessen wird und
- daß der in zeitlichen Abständen festgestellte Temperaturunterschied der Temperaturen von Sonde (5) und Fühler zur Regelung der Leistung der Pumpe (2) entsprechend der jeweils veränderten Kennlinie (K) verwendet wird.

6. Verfahren nach einem der Ansprüche 1 bis 5, dadurch gekennzeichnet, daß zur Regelung der Leistung der Pumpe (2) vom Rechner (6) Werte vorgegeben werden, die geringfügig höher als die Werte der Kennlinie (K) sind, beispielsweise um 5 % höhere Werte.

7. Verfahren nach einem der Ansprüche 1 bis 6, dadurch gekennzeichnet, daß der zeitliche Abstand zwischen den einzelnen Zuführungen der gleichbleibenden Wärmemenge konstant gehalten wird.

8. Verfahren nach einem der Ansprüche 1 bis 7, dadurch gekennzeichnet, daß an einer von der Sonde (5) räumlich entfernten Stelle zusätzlich die Temperatur des Fluids gemessen und dem Rechner (6) aufgegeben wird.

9. Verfahren nach einem der Ansprüche 1 bis 8, dadurch gekennzeichnet, daß vom Rechner (6) für die Pumpe (2) eine Mindestleistung von beispielsweise 40 % der maximalen Leistung vorgegeben wird, die beim Betrieb der Pumpe (2) nicht unterschritten werden kann.

10. Verfahren nach einem der Ansprüche 1 bis 9, dadurch gekennzeichnet, daß die Leistung der Pumpe (2) bei Störungen im Regelkreis vom Rechner (6) auf einen festen Wert von beispielsweise 70 % der maximalen Leistung eingestellt wird.

## Claims

1. Method of regulating the power output of a pump (2) which is driven by a speed regulated electric motor and by means of which a fluid is moved along predefined paths (4) in a system in which the number and the internal cross-sections of the paths are variable, wherein the rate of flow of the fluid is determined by means of a probe (5) which delivers an electrical signal that is proportional to the rate of flow and wherein the signal from the probe (5) is supplied to a computer (6) by means of which the rotational speed of the electric motor and hence the power output of the pump is regulated,
characterised in that,
- during a calibration process for some arbitrary initial state of the system, the electrical signal from the probe (5) is recorded, at least in steps, at a plurality of points using particular settings of the pumping power and the appertaining percentage rates of flow of the fluid, from the static state of the pump (2) up to 100% power output thereof which corresponds to a 100% rate of flow, and the signals are each passed to the computer (6) as test values,
- that a characteristic curve (K) is produced by the computer (6), which curve passes through each of the test values delivered by the probe (5),
- that in carrying out the method, the power output of the pump (2) is initially regulated by the computer (6) in correspondence with the characteristic curve (K) within the limits set by the calibration process until such time as, due to changes in the system, a greater rate of flow of the fluid occurs than for a 100% power output of the pump (2) during the calibration process,
- that the highest value of the rate of flow is defined as a new test value for a 100% power output of the pump (2) on an extension of the characteristic curve (K),
- that, in each case, the computer (6) displaces each of the percentage values of the rate of flow along the characteristic curve (K) by an amount which corresponds proportionately to the ratio of the new highest rate of flow to the preceding one and
- that, in a manner analogous thereto, an adaptation of the characteristic curve (K) is effected by the computer (6) whenever a further increase in the rate of flow occurs.

2. Method in accordance with Claim 1, characterised in that,
- when recording the test values, the same amount of heat is supplied to the probe on each occasion,
- that the temperature of the probe (5) is measured at the start of the heat supplying process and after the expiry of a time period which is the same on each occasion and
- that, after conversion into an electrical signal, each temperature difference, which is determined in this way, is passed to the computer (6) as a test value.

3. Method in accordance with Claim 1, characterised in that,
- the probe (5) is heated continuously using a constant power,
- that the temperature of the fluid is measured at a position spatially separate from the probe (5) using a sensor and
- that the temperature difference between the temperatures of the probe (5) and the sensor, which temperatures are determined at periodic intervals, is passed to the computer (6) as a test value.

4. Method in accordance with Claim 1 or 2, characterised in that,
- whilst the pump (2) is operational, the same amount of heat as for the calibration process is supplied on each occasion to the probe (5) at periodic intervals,
- that the temperature difference is also measured during the operation of the pump (2) with the same time lapses as for the calibration process and this is passed to the computer (6) after being converted into an electrical signal and
- that the signals delivered in this manner by the probe (5) are used for the regulation of the power output of the pump (2) in correspondence with the currently altered characteristic curve (K).

5. Method in accordance with Claim 1 or 3, characterised in that,
- whilst the pump (2) is operational, the probe (5) is heated continuously using a constant power,
- that the temperature of the fluid is also measured by the sensor during the actual operation of the pump (2) and
- that the temperature difference between the temperatures of the probe (5) and the sensor, which temperatures are determined at periodic intervals, is used for the regulation of the power output of the pump (2) in correspondence with the currently altered characteristic curve (K).

6. Method in accordance with any of the Claims 1 to 5,
characterised in that, values, which are just a little higher than the values of the characteristic curve (K), for example, values that are higher by 5%, are provided by the computer (6) for the regulation of the power output of the pump (2).

7. Method in accordance with any of the Claims 1 to 6,
characterised in that, the time interval between the individual supplies of the same amount of heat is maintained constant.

8. Method in accordance with any of the Claims 1 to 7,
characterised in that, in addition, the temperature of the fluid at a position, which is spatially remote from the probe (5), is measured and passed to the computer (6).

9. Method in accordance with any of the Claims 1 to 8,
characterised in that, a minimum power output for the pump (2), for example, of 40% of the maximum power output, is predetermined by the computer (6), so that the power output cannot fall below this minimum during the operation of the pump (2).

10. Method in accordance with any of the Claims 1 to 9,
characterised in that, the power output of the pump (5) is set by the computer (6) to a fixed value, for example, of 70% of the maximum power output, when there are disturbances in the regulating circuit.

## Revendications

1. Procédé pour la régulation du débit d'une pompe (2) entraînée par un moteur électrique à vitesse réglable, pompe au moyen de laquelle un fluide circule dans un système le long de trajectoires prédéterminées (4) dont le nombre et la section interne sont variables, procédé avec lequel la vitesse d'écoulement du fluide est mesurée à l'aide d'une sonde (5) qui délivre un signal électrique proportionnel à la vitesse d'écoulement et avec lequel le signal de la sonde (5) est envoyé à un ordinateur (6) qui régule le nombre de tours du moteur et ainsi le débit de la pompe,
caractérisé en ce que
- tout d'abord au cours d'une opération d'étalonnage dans n'importe quel état du système, le signal électrique de la sonde (5) est relevé en plusieurs points, du moins par palier, en présence d'un réglage ciblé du débit de la pompe et d'une vitesse associée selon un pourcentage d'écoulement du fluide, depuis l'arrêt de la pompe (2) jusqu'à 100 % de son débit correspondant à 100 % de la vitesse d'écoulement et est retransmis à l'ordinateur (6) à chaque fois en tant que valeur de mesure,
- l'ordinateur (6) établit une courbe de fonctionnement (K) qui passe par toutes les valeurs de mesure fournies par la sonde (5),
- à la mise en oeuvre du procédé, le débit de la pompe (2) est régulé par l'ordinateur (6) tout d'abord suivant la courbe de fonctionnement (K) dans les limites définies par l'opération d'étalonnage aussi longtemps qu'à la suite de modifications dans le système, une vitesse d'écoulement, plus élevée, du fluide que pour un débit à 100 % de la pompe (2) ne survienne pas pendant l'opération d'étalonnage,
- l'ordinateur (6) détermine la plus haute valeur de la vitesse d'écoulement sur la courbe de fonctionnement (K) allongée en tant que nouvelle valeur de mesure pour un débit à 100 % de la pompe (2),
- l'ordinateur (6) décale toutes les valeurs de pourcentage de la vitesse d'écoulement sur la courbe de fonctionnement (K) dans un rapport correspondant au rapport entre la nouvelle vitesse d'écoulement la plus haute et la précédente et
- une adaptation analogue de la courbe de fonctionnement (K) est alors effectuée systématiquement par l'ordinateur (6) si une autre augmentation de la vitesse d'écoulement survient.

2. Procédé selon la revendication 1, caractérisé en ce que
- la sonde (5) est alimentée en une quantité de chaleur systématiquement constante pour l'enregistrement des valeurs de mesure,
- la température de la sonde (5) est mesurée au début de l'apport de chaleur et après l'écoulement d'un laps de temps systématiquement constant, et
- la différence thermique déterminée a chaque fois est convertie en un signal électrique et transmise à l'ordinateur (6) en tant que valeur de mesure.

3. Procédé selon la revendication 1, caractérisé en ce que
- la sonde (5) est chauffée en permanence avec une puissance constante,
- la température du fluide est mesurée par un thermomètre à un endroit séparé de la sonde (5), et
- la différence thermique constatée aux intervalles de temps entre les températures de la sonde (5) et du thermomètre est transmise à l'ordinateur (6) en tant que valeur de mesure.

4. Procédé selon la revendication 1 ou 2, caractérisé en ce que
- pendant le fonctionnement de la pompe (2), la sonde (5) est alimentée, à des intervalles de temps, systématiquement avec la même quantité d'eau qu'au cours de l'opération d'étalonnage,
- également pendant le fonctionnement de la pompe (2), la différence thermique est mesurée sur la même durée de temps que pendant l'opération d'étalonnage, et après la conversion en signal électrique, est transmise à l'ordinateur (6) et
- les signaux délivrés par la sonde (5) sont utilisés pour la régulation du débit de la pompe (2) en fonction de la courbe de fonctionnement (K) respectivement modifiée.

5. Procédé selon la revendication 1 ou 3, caractérisé en ce que
- pendant le fonctionnement de la pompe (2), la sonde (5) est chauffée en continu à puissance constante,
- la température du fluide est mesurée par un thermomètre également pendant le fonctionnement de la pompe (2) et
- la différence thermique constatée aux intervalles de temps entre les températures de la sonde (5) et du thermomètre est utilisée pour la régulation du débit de la pompe (2) en fonction de la courbe de fonctionnement (K) respectivement modifiée.

6. Procédé selon l'une des revendications 1 à 5, caractérisé en ce que pour la régulation du débit de la pompe (2), l'ordinateur (6) détermine des valeurs qui sont légèrement plus élevées que les valeurs de la courbe de fonctionnement (K), de l'ordre de 5 % par exemple.

7. Procédé selon l'une des revendications 1 à 6, caractérisé en ce que l'intervalle de temps entre chaque apport de la même quantité d'eau reste constant.

8. Procédé selon l'une des revendications 1 à 7, caractérisé en ce que la température du fluide est mesurée une fois de plus à un endroit éloigné de la sonde (5) et est transmise à l'ordinateur (6).

9. Procédé selon l'une des revendications 1 à 8, caractérisé en ce que l'ordinateur (6) définit, pour la pompe (2), un débit minimal faisant par exemple 40 % du débit maximal, la pompe (2) ne pouvant pas tourner à un débit inférieur.

10. Procédé selon l'une des revendications 1 à 9, caractérisé en ce que l'ordinateur (6) amène le débit de la pompe (2), dans le cas de pannes dans le circuit de réglage, à une valeur fixe représentant par exemple 70 % du débit maximal.
